# EUROPEAN PATENT APPLICATION

(11) **EP 4 723 577 A1**
(43) Date of publication of application: **08.04.2026**
(21) Application number: 25202450.0
(22) Date of filing: 16.09.2025
(51) Int. Cl.: H04L 41/5054, H04L 67/10, H04L 67/51, H04W 4/50

(54) **APPARATUS, METHOD AND COMPUTER PROGRAM PROVIDING AN EDGE APPLICATION INSTANCE SERVICE FOR A USER EQUIPMENT**

(30) Priority: 04.10.2024 FI 20246203
(71) Applicant: Nokia Solutions and Networks Oy, 02610 Espoo (FI)
(72) Inventor: LE PALLEC, Michel, Massy (FR); BUI, Dinh Thai, Châtenay-Malabry (FR)
(74) Representative: Nokia EPO representatives

(57) **Abstract**

A method comprising: receiving a request for an edge application instance service for an application from a user equipment in a first service provider domain; determining a plurality of partial edge application instance options for the application, a respective partial edge application option being a part in a second service provider domain for an edge application instance, the second provider domain comprising at least a network service provider domain; configuring and reserving respective resources for each of the plurality of partial edge application options in the second domain; and after selection of one of the plurality of partial edge application options for servicing the application with an edge application instance, causing release of other of the plurality of edge application options.

## Description

### TECHNICAL FIELD

The present disclosure relates to an apparatus, method and computer program. In particular, but not exclusively, the present disclosure relates to apparatus, methods and computer programs providing an edge application instance service for a user equipment.

### BACKGROUND

A communication network can be seen as a facility that enables communications between two or more terminal devices or provides terminal devices access to at least a data network. A mobile or wireless communication network is one example of a communication network. A terminal device may be provided with a service or application.

Such communication networks operate in according with standards such as those provided by 3GPP (Third Generation Partnership Project) or ETSI (European Telecommunications Standards Institute). Examples of standards are the so-called 5G (5th Generation) or so-called 6G (6th Generation) under definition standards provided by 3GPP.

Applications may be supported by edge application resources, for example edge computing resources and/or application servers.

### SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to a first aspect, there is provided a method comprising: receiving a request for an edge application instance service for an application from a user equipment in a first service provider domain; determining a plurality of partial edge application instance options for the application, a respective partial edge application option being a part in a second service provider domain for an edge application instance, the second provider domain comprising at least a network service provider domain; configuring and reserving respective resources for each of the plurality of partial edge application options in the second domain; and after selection of one of the plurality of partial edge application options for servicing the application with an edge application instance, causing release of other of the plurality of edge application options.

Other features may be seen from the claims dependent on claim 1.

The method may be performed by an apparatus.

The apparatus may be a or provide a management function. The apparatus may be a or provide a network function. The network or management function may be an integration of network and compute function.

The apparatus may comprise at least one processor; and at least one memory storing instructions that, when executed by the at least one processor, cause the apparatus at least to provide one or more of the methods of the first aspect.

According to a second aspect, there is provided an apparatus comprising: means for receiving a request for an edge application instance service for an application from a user equipment in a first service provider domain; means for determining a plurality of partial edge application instance options for the application, a respective partial edge application option being a part in a second service provider domain for an edge application instance, the second provider domain comprising at least a network service provider domain; means for configuring and reserving respective resources for each of the plurality of partial edge application options in the second domain; and means for, after selection of one of the plurality of partial edge application options for servicing the application with an edge application instance, causing release of other of the plurality of edge application options.

The configuring and reserving respective resources of one or more of the plurality of partial edge application options may be prior to the selection of one of the plurality of partial edge application options for servicing the application with the edge application instance.

The means for determining may be for determining the plurality of partial edge application instance options in dependence on available network and computing resources in the second domain.

The means for determining may be for determining for each of plurality of partial edge application instance options one or more of: a respective base station; or radio resources for communications with the user equipment.

The means for determining may be for associating each partial edge application instance option with a respective identifier.

The respective identifier may comprise an internet protocol address associated with the user equipment.

The respective identifier may comprise an internet protocol address associated with a respective application module dedicated to the user equipment.

The means for determining may be for receiving, from apparatus in the second domain, information relating to the user equipment.

The information relating to the user equipment may be deterministic and may comprise one or more of: operating system; virtualization technology; compute capabilities; network capabilities; or location.

The information relating to the user equipment may be predictive and may comprise one or more of: predicted available network resources; predicted available compute resources; predicted location; or one or more predicted states.

The apparatus may comprise means for using the information relating to the user equipment to select a subset of one or more of the determined plurality of partial edge application instance options, the selected one of the plurality of partial edge application options being selected from the subset.

The request for the edge application instance service for the application may comprises one or more of: information identifying the application; or a representation of the application.

The receiving means may be for receiving the request for edge application slice options from an application manager on the user equipment.

The apparatus may comprise means for causing information to be provided to the user equipment about one or more of the determined partial edge application instance options partial slice options for the application.

The information about one or more of the determined partial edge application instance options may comprise for each partial edge application instance option one or more of: the respective identifier; information about the radio resources for communication with the user equipment; or information about the respective base station.

The apparatus may be a or provide a management function. The apparatus may be a or provide a network function. The network or management function may be an integration of network and compute function.

According to a third aspect, there is provided a method comprising: sending a request for an edge application instance service for an application from a user equipment in a first service provider domain; receiving information about a plurality of partial edge application instance options for the application, a respective partial edge application option being configured and reserved in a part in a second service provider domain for an edge application instance, the second provider domain comprising at least a network service provider domain; selecting of an edge application instance service comprising one of the plurality of partial edge application instance options; and sending information to the second domain, said information comprising information about the one of the plurality of partial edge application instance options for the selected edge application instance.

Other features may be seen from the claims dependent on claim 16.

The method may be performed by an apparatus.

The apparatus may be a or provided on a user equipment.

The apparatus may comprise at least one processor; and at least one memory storing instructions that, when executed by the at least one processor, cause the apparatus at least to provide one or more of the methods of the third aspect.

According to a fourth aspect, there is provided a user equipment comprising: means for sending a request for an edge application instance service for an application from a user equipment in a first service provider domain; means for receiving information about a plurality of partial edge application instance options for the application, a respective partial edge application option being configured and reserved in a part in a second service provider domain for an edge application instance, the second provider domain comprising at least a network service provider domain; means for selecting of an edge application instance service comprising one of the plurality of partial edge application instance options; and means for sending information to the second domain, said information comprising information about the one of the plurality of partial edge application instance options for the selected edge application instance.

The information about the plurality of partial edge application instance options for the application may comprise configuration related information for use by the user equipment.

The information about the plurality of partial edge application instance options for the application may comprise for each of plurality of partial edge application instance options one or more of: a respective base station; radio resources for communications with the user equipment; a respective identifier; an internet protocol address associated with the user equipment; or an internet protocol address associated with a respective application module dedicated to the user equipment.

The user equipment may comprise determining a plurality of first domain partial edge application instance options for the application, a respective first domain partial edge application options being a part in the first domain for the edge application instance.

The edge application instance service may comprise in addition to one of the plurality of partial edge application instance options one of the plurality of first domain partial edge application instance options.

According to another aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1 is a schematic representation illustrating the selection of a deployment solution for a distributed application deployed according to an example, corresponding to a 3GPP SA2 simplified scenario.
FIG.2. illustrates examples of different possible solutions for deployment of a distributed application.
FIG. 3 which schematically shows an example of some embodiments, having a first domain (UE) and a second domain (MNO).
FIG.4a and 4b which show an example procedure of some embodiments.
FIG.5 schematically shows the second domain along with a virtual UE.
FIG.6 shows in more detail the virtual UE and the UE.
FIG.7 which shows a dynamic compute offload embodiment.
FIG. 8 shows a first method of some embodiments.
FIG. 9 shows a second method of some embodiments.
FIG. 10 is a schematic representation of an apparatus.

### DETAILED DESCRIPTION

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): Worldwide Interoperability for Micro-wave Access (WiMAX), Global System for Mobile communications (GSM, 2G), General Packet Radio Service (GRPS), Universal Mobile Telecommunication System (UMTS, 3G) based on basic wideband-code division multiple access (W-CDMA), highspeed packet access (HSPA), Long Term Evolution (LTE), LTE-Advanced, and enhanced LTE (eLTE), 5G (also called NR), or any future RAT such as 6G. Moreover, communication within the communication network may utilize any wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network node" refers to a node in a communication network via which user equipment may access the network and/or which is capable of controlling radio communication and managing radio resources within a cell. The network node may be referred to as a base station (BS), an access point (AP), an access node, or a radio access node. The network node may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network node such as a satellite network node, a low earth orbit (LEO) satellite and a geosynchronous earth orbit (GEO) satellite, or an aircraft network node.

Moreover, in connection of split radio access network (RAN), the network node may refer to a centralized unit (CU) of a base station and/or a distributed unit (DU) of a base station. An interface between CU and DU may be referred to as an F1 interface in ORAN Alliance. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layer. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). In this disclosure, the terminology "UE" is used and should be understood to cover any appropriate terminal device such as discussed in the following. The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

Resources include network resources and compute resources.

Network resource may refer for example to (wired or wireless) communication links, communication components/functions (e.g., gNB, UPF (user plane function), etc.) and/or communication interfaces for communicating between two physically distinct entities through a network segment. A requirement related to a network resource may be expressed by various parameters, for example a bandwidth of a communication link, network latency, packet loss, reliability, power consumption, etc.

Compute resources may refer for example to any type of processor, processing resources or processing architectures. A requirement related to a compute resource may be expressed by various parameters, e.g., a processing capacity, processing type (CPU (central processing unit), GPU (graphics processing unit), NPU (neural processing unit), DPU (data processing unit) and/or the like, security features, a processing load, cache memory, etc. Compute resources may also include storage resources such as Random Access Memory (RAM), hard-disk memory, etc. Those latter resources store the data before and after they are processed or computed.

It is proposed, for example for 6G, that network operators, e.g. mobile network operators (MNOs) may support additional services. For example, the additional services may comprise compute services. The additional services may be associated with third parties. The additional services may be edge application services or edge computing services.

Network operators are looking for an integrated management and control of both compute and communication resources. The concept of computing and network convergence (CNC) comes from computing force network (CFN), computing aware network (CAN), and/or the like. This may enable the convergence between a computing domain and a network domain.

Edge application slices (EAPS) have been proposed. EAPS may consider how to map an application (with its requirements) with available network and compute resources. Such a mapping may result in a set of identified EAPS solutions (EAPS Id).

Another aspect associated with EAPS relates to the deployment and configuration of a best or selected EAPS solution by configuring the infrastructure (e.g. mobile network). A best EAPS solution may be selected using any suitable criteria. An EAPS solution which is selected may be on the basis of one or more criteria.

Some embodiments may relate to edge application instances. Those edge applications may be edge application slices or any other suitable edge application instances. Some example embodiments are described with reference to edge application slices. However, it should be appreciated that those embodiments may alternative be used with any other suitable edge application instances.

Some embodiments may make use of metrics collection.

Some embodiments may relate to the determining a set of edge application instance options. For example, a set of best EAPS Id solutions may be determined.

Some embodiments may relate to the deployment and configuration of the finally selected edge application instance. This may be for example an EAPS Id solution.

Some embodiments may relate to the distribution of functionalities, for example, along the end-to-end system. The distribution of functionalities may be according to defined 3GPP principles or constraints.

Some embodiments may relate to any oriented graph of application software components which should be placed/mapped onto an underlying network and compute resources.

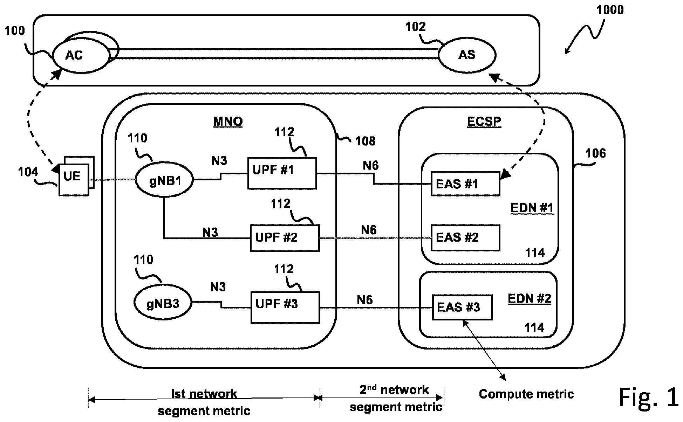

Reference is made to Figure 1. Figure 1 is a schematic representation illustrating the selection of a deployment solution for a distributed application deployed according to an example, corresponding to a 3GPP SA2 simplified scenario (3GPP 5GA use case).

In this simplified example, the distributed application consists in only two application components: the Application Client (AC) 100 which is running on the UE 104 and an Application Server (AS) 102 which is to be placed onto a server, e.g., an Edge Application Server (EAS) or other edge node. The application components AC and AS may be provided by an application service provider (ASP). The EAS may be deployed in a computing service infrastructure 106 of a computing service provider (e.g., an Edge Computing Service Provider, ECSP).

In general, a distributed application may comprise at least two application components. An application component may be referred to as an Application Component Function (ACF).

The UE 104 may connect to a mobile network 108 provided by a mobile network operator (MNO) 108. The mobile network 108 of the MNO may comprise one or more Radio Access Networks (RANs), comprising radio access nodes (e.g., a gNode B) 110, The mobile network 108 of the MNO may comprise one or more and one or more user plane functions (UPF) 112 associated with the access nodes. The UE 104 may connect to one or more access nodes 110 of the mobile network 108. The one or more access nodes 110 interface with one or more UPFs 112 via a communication interface (e.g., a N3 interface).

The application service infrastructure 106 may comprise one or more data networks (e.g., edge data networks, EDN) 114 with (for example cloud) computing resources. The one or more EDNs 114 may comprise one or more EAS instances (EAS#1, EAS#2, EAS#3, etc.). The one or more UPFs 112 of the mobile network 108 may interface with the one or more EAS instances via a communication interface (e.g., N6 interface).

Network metrics may be determined for the network segments between the UE 104 and the one or more UPFs 112 via the one or more RANs 110. Network metrics determined for the network segments between the one or more EAS instances and the one or more UPFs 112. Compute metrics may be determined for the computing resources in the computing service infrastructure 106 of a computing service provider. The network and compute metrics may be used to select network and compute resources for deploying the distributed application.

In the example of FIG. 1, there are three available application servers EAS#1, EAS#2 and EAS#3 corresponding respectively to three deployment solutions:

The server EAS#1 is accessible through network resources including the access node gNB1, the interface N3, the UPF#1 and the interface N6;

The server EAS#2 is accessible through network resources including the access node gNB1, the interface N3, the UPF#2 and the interface N6;

The server EAS#3 is accessible through network resources including the access node gNB3, the interface N3, the UPF#3 and the interface N6.

Finding an optimized deployment solution (sometimes referred to as the "Best" EAS selection use case) for the distributed application may be performed by optimizing an aggregated metric which is a function of three types of metrics:
first network segment metrics which cover the network resources (e.g., communication links, interfaces, and/or the like) of the network segment between the UE and the UPF;
second network segment metrics which cover the network resources (e.g., communication links, interfaces, and/or the like) of the network segment between the UPF and the EAS; and
compute metrics which cover the compute resources of the AS, or more generally the computing service infrastructure 106.

Some embodiments may make use of a management function with a capability of having a view of network and compute resources of the system. The management function may collect or otherwise obtain one or more of the previously described metrics. This management function may be referred to as an Integration of Network and Compute Function (INCF).

In some embodiments, the management function, for example INCF, is interfaced (directly or indirectly) with the application layer (Application Service Provider) and/or different control entities having a view of the one or more of the previously described metrics. The management function, for example INCF, may act as a centralized decision-maker which can derive a so-called best solution, for example to select a preferred edge application instance, e.g. a preferred edge application slice.

Some embodiments may be used with use cases such as compute offload cases.

Some embodiments may aim to reduce the delay associated with the identifying, configuration, and deployment of an edge application instance, for example an edge application slice.

Transient over booking methods have been generally proposed. For example, if applied in the context of an EAPS scenario, a set of best possible EAPS solutions would be first discovered. Next, the EAPS solutions of this set would be deployed and configured. Next, a solution of this set would be selected. Then, all unused previously deployed and configured EAPS solutions of the set with their allocated network and compute resources would be released.

Persistent over booking has been proposed which is similar to transient over booking. For example, in applied in the context of an EAPS scenario, some partial (also called local) EAPS solutions would be made persistently. A set of EAS servers with dedicated allocated compute resources may be deployed for a set of application clients or UEs instead of dynamically instantiating the servers according to application needs. This method can lead to overprovisioning.

In both transient over booking and persistent over booking, the deployment process is subsequent to the discovery of all possible EAPS solutions.

For transient or persistent over booking, as part of a discovery process (often considered as part of a decision-making process), a set of end-to-end application instance solutions (or EAPS solutions) would first be discovered with deployment and configuration details. An end-to-end application instance logically extends from the UE at one end to the edge node at the other end (for example EAS or compute node). This set would include an optimal EAPS solution that will be finally selected (as a final decision-making step). A mechanism to deploy and configure in advance EAPS solutions may need to consider scalability issues. There may be some issues at the UE level. Illustratively, the over booking strategy may put a requirement on the UE to support simultaneous radio links for different solutions prior to the selection of the one solution to be used.

A discovery process may be required and should be efficient in terms of number of identified solutions to avoid a huge over booking and waste of both network and compute resources. Due to successive steps (e.g. metrics collection, identification of possible EAPS solutions, selection of a best solution, configuration and deployment of the selected solution), the delay between an application service request and the effective availability of this service may also be an additional issue. This issue may be addressed by some embodiments.

If the UE cannot support simultaneously multiple PDU (Protocol Data Unit) sessions, there may be further delays in performing solution discovery and selection of a solution process. Therefore, the deployment time may impact the end-user experience. This issue may be addressed by some embodiments.

Some embodiments may be particularly suitable for applications having relatively stringent requirements. For example, the applications may have relatively strict (e.g. deterministic and not probabilistic) service level agreement (SLA) guarantees (as end to end latency).

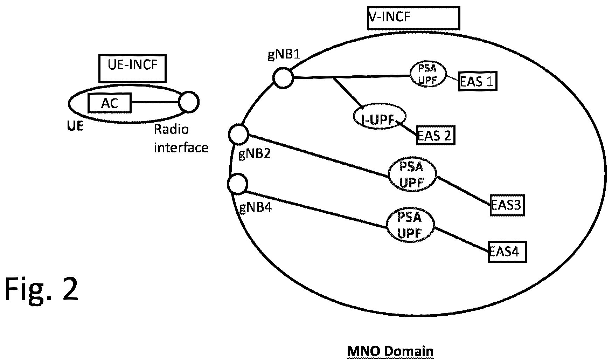

Consider the scenario shown in Figure 2 which shows an edge node, for example an EAS, compute node and/or the like, selection use case with a selection of a so-called best solution, for example a best EAPS solution. In the example of the Figure 2, the edge nodes are exemplified by EASs but these edge nodes may be any other suitable edge nodes.

The UE represents a first domain and a second domain is provided by a virtual domain such a MNO (mobile network operator) administrative domain.

Pre-instantiated and/or non-pre-instantiated EASs (sometimes referred to as virtual EASs) with different capabilities are available in the second domain (e.g. administrative MNO domain). These are referred to as EAS 1, EAS 2, EAS 3 and EAS 4. The EASs are reachable from the application client (AC) on the UE through different possible access nodes, gNB 1, gNB2 and gNB4 in the example of Figure 2. Hence, several application instance (EAPS) solutions are possible. In the example of Figure 2, there are three possible partial EAPS solutions in the second domain and one EAPS partial solution in the first domain.

In the example of Figure 2, there are four possible EAPS solutions. These four solutions would be associated with 3 different possible PDU sessions. The first PDU session would involve the UE, gNB1 and PSA (PDU session anchor) UPF1 or I-UPF (intermediate UPF). The application flows for the first session may be steered either to EAS1 (the first EAPS solution) or to EAS2 (the second EAPS solution). The second PDU session would involve the UE, gNB2 and PSA UPF2. The application flows for the second session may be steered to EAS3 (the third EAPS solution). The third PDU session would involve the UE, gNB4 and PSA UPF3. The application flows for the third session may be steered to EAS4 (the fourth EAPS solution).

Switching from a current EAPS solution to another target EAPS solution may require a radio handover with the switching from a current source gNB to a new target gNB. However, some cases could be simpler where, for example, the radio link remains the same. Then, the EAPS solution switching may trigger a PDU Session Modification procedure instead of a handover.

From the set of four possible solutions, one solution is selected and then deployed and configured.

In one example, a methodology for the identification, deployment and configuration of an EAPS solution is as follows:

Possible EAPS solutions may be identified. This may use a centralized function such as the management function (for example an INCF) to collect required metrics to determine the possible EAPS solutions. This management function may alternatively be referred to as a control function. This management function may be provided as a network function in some examples. The network function may be a network function in the core network. This discovery step may consider a near real-time state related to the UE such as its computing resources and/or a real-time quality of the radio link interfacing the second MNO domain.

When the possible EAPS solutions are identified, a solution is selected through a decision-making step.

Finally, the selected EAPS solution is deployed and configured. This may involve the reconfiguration or modification of the associated PDU session.

There may be issues with this methodology. As a centralized metrics collection and decision-making process is used, the EAPS solution which is selected may be outdated with regards to changes at the UE level or at the UE/MNO interface level. For example, air radio link performance KPIs (key performance indicators) may have changed. There may be metrics related to the UE that may not be available to the central function and thus not able to be used in the selection of an EAPs option. The sequential steps of metrics collection, decision making, deployment and configuration may introduce delays, which depending on the application may not be acceptable, for example in terms of user experience.

The example embodiments disclosed may be applied in a network environment comprising multiple domains. A domain is an administrative and/or a technological concept grouping resources under the responsibility of one or more stakeholders e.g. legal and/or physical persons which share ownership of the resources. Resources include network resources and compute resources.

The network slice concept, specified by several standard bodies (3GPP, IETF, ETSI ZSM, GSMA...) is defined as a logic partition of infrastructure resources to meet a given communication service level agreement. Typically, a set of network and compute resources is used to support virtual networking functions in order to provide a communication service with a related service level agreement defined by communication parameters such as the communication latency.

Similarly, a concept of application slicing is defined at the application layer, where network and compute resources in multiple domains of a network environment are used for distributed deployment of an application.

A main challenge of application slicing is to discover the network and compute resources in the multiple domains of the network environment that best meet the requirements of the application. For example, in processing offload scenarios such as virtual reality or metaverse applications, latency is a critical requirement and depends significantly on the transport and processing latency introduced respectively by the network and compute resources which are selected for deploying the virtual reality or metaverse applications.

In some embodiments, a multi-domain context which may have two or more domains is considered as a two-domain context. The placement of a distributed application, composed of multiple application components (e.g. ACFs), over network and computer resources in a multidomain context is considered as a two domains problem.

The first domain is the UE. This domain being managed by a local management function. In this document, that function will be referred to as a UE-INCF.

The second domain may be considered to be a virtual domain. This domain may be managed by a virtual domain management function. In this document, that virtual domain management function will be referred to as a V-INCF or MNO-INCF. The virtual domain may be made up of one, two or more network and compute domains. In some embodiments, the MNO administrative domain may be one of these domains. The management function of the virtual domain is called as V-INCF. Most of the time, the management function of the MNO, sometimes called a MNO-INCF, plays the role of the V-INCF with regards to the UE-INCF or to application manager as the MNO is directly interfacing with the UE.

In some embodiments, the second domain may only comprise a MNO domain which owns compute resources. The compute resources of the MNO domain may be reachable via a specified 3GPP N6 interface.

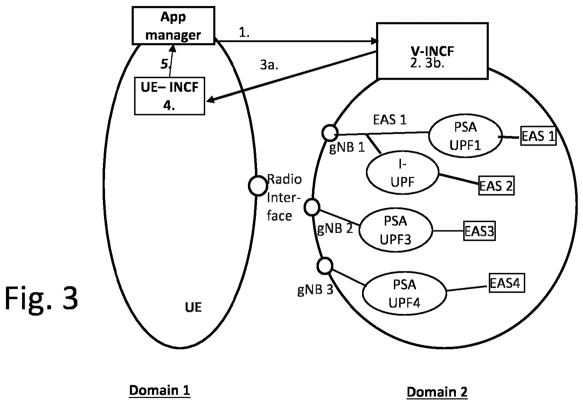

Reference is made to Figure 3 which schematically shows an example of some embodiments.

The first domain is the UE domain. The first domain or UE may have an application client. The first domain or UE may have an application manager. The application client may deal with the user plane (service use). The application manager may be regarded as an INCF service consumer. The application manager may deal with management task (for example by requesting INCF services). In some embodiments, the application manager and the application client may be integrated and provided by a common component. In other embodiments, the application manager and the application client may be provided by separate components.

The first domain also has a local management function, UE-INCF. The application manager may be co-located or integrated with the UE-INCF. The UE-INCF may be co-located with the UE.

The second domain is the virtual domain and may be considered to be a MNO domain in this example and is generally as discussed in relation to Figure 2. The second domain may comprise a data network DN which may or may not be part of the MNO domain. In this example, the DN may be considered as part of the MNO administrative domain. A management coordination function is provided for the second domain. In this example, that management function is referred to as an V-INCF. In some embodiments, the function may be referred to a MNO INCF.

The first and second domains may be delineated by the radio link between the UE and the access node, for example, the gNB. The radio interface (e.g. modem) of the UE is part of the first domain. The radio interface of the gNB is part of the second domain. The gNB is an inter-domain interface which delineates the MNO domain.

In some embodiments, a set of partial [S2] options are determined. In some examples, an option may be referred to as a solution. The partial options may be partial edge application instance options. In the following example, the partial edge application instance options are partial EAPS options. However, it should be appreciated that other partial edge application instance options (not able to meet application requirements) may be used instead of partial EAPS options

These partial [S2] options may be refined with a virtual UE, as will be discussed in more detail later.

An edge application instance option, for example an EAPS option may be regarded as an end-to-end option from the UE at one end (e.g. the application client on the UE) and an edge node at the other end (e.g. the computing node or edge application server or the like). The edge application instance option may comprise an application instance option deployment. The deployment may be a distributed deployment. The application may be made up of multiple application components deployed and configured according to network and compute resources. The configuring and deploying of the application components may be such that the requirements of the application in terms of both network and compute metrics are satisfied.

In contrast, a partial edge application instance option, for example a partial EAPS is a partial or incomplete deployment of an application instance. In some embodiments, the partial option may be a partial or incomplete deployment of an application instance in the second domain.

In some embodiments, the deployment and configuration of each partial edge application instance option is initiated before the identification and selection of an end-to-end edge application instance option, for example the best EAPS solution. The deployment and configuration of each partial edge application instance option may be initiated as soon as that option has been determined or identified.

When the partial edge application instance option, identified as part of a selected end to end solution, is deployed and configured, the unused and deployed partial edge application instance options are released.

Some embodiments may provide a transient over booking method in the second domain. Advantageously, in some embodiments, there is no need for transient over booking of for example radio resources and/or for the UE to support parallel PDU sessions.

The deploying and configuring of partial edge application instance options, e.g. partial EAPS [S2] solutions, in the second domain may take place in parallel to the identification of the end-to-end solution involving both the first and second domains.

The pre-deployment and configuration of partial edge application instance option solutions may shorten the application deployment time.

As referenced 1 in Figure 3, a request for an application instance service, e.g. a EAPS service request, is sent to the management function in the second domain, e.g. the V-INCF.

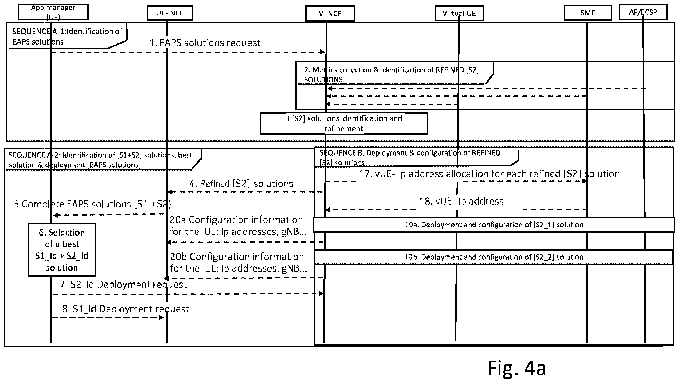

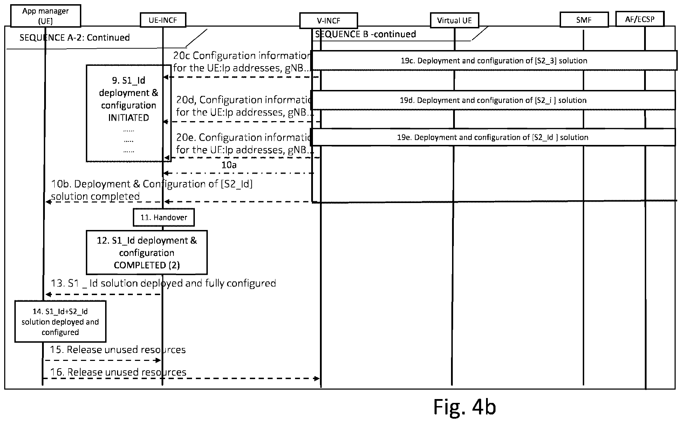

A management function service consumer e.g. an INCF service consumer in the UE sends the request for the application instance service. The service consumer may be an edge enabler client or an application manager (as shown in the example of Figure 4a and 4b).

As referenced 2, partial edge applications instance options for the second domain are determined by management function in the second domain, e.g. the V-INCF. The management function in the second domain, e.g. the V-INCF may collect metrics for this determination and/or obtain metrics for the determination.

Each partial edge applications instance option may be characterized by one or more of the following:
UE-Id (UE identifier)
(target) access nodes e.g. gNB(s);
the placement of application components over identified compute nodes (CNs); and/or
traffic steering and/or QoS (quality of service) policy information to steer application flows between application component functions (ACF).

Optionally, the partial edge applications instance options, e.g. partial EAPS [S2] options may be refined by leveraging the deterministic and/or probabilistic knowledge that the management function in the second domain, e.g. the V-INCF may have about the UE. This may be done using a virtual UE such as discussed later.

As referenced 3a, information about one or more of the partial edge applications instance options, e.g. partial EAPS [S2] options are sent by the management function in the second domain, e.g. from the V-INCF to the UE, for example to the management function in the UE, e.g. the UE-INCF. This information may comprise, as discussed later, UE IP addresses associated with each partial edge applications instance options, e.g. partial EAPS [S2] options.

As referenced 3b, the partial edge applications instance options, e.g. partial EAPS [S2] options are configured and deployed in the second domain. For each partial option, application components are instantiated and configured on identified compute nodes. This allows for partially complementing the information (e.g. the associated UE IP address associated with a respective option) which is required to steer the application traffic within the second domain, for example the MNO domain.

The part of the procedure referenced as 3a and 3b may take place in any order or at the same time.

A virtual UE address, IP_UE, may be allocated by the management function in the second domain, e.g. V-INCF for each partial solution to allow their deployment and configuration without the UE domain involvement. This allocation may be performed in the part of the procedure referenced 2 or the part of the procedure referenced 3b.

As referenced 4, the management function in the UE, e.g. the UE-INCF determines one or more partial edge application instance options, e.g. partial EAPS [S1] solutions in the first domain, that is in the UE domain. The one or more partial edge application instance options, e.g. partial EAPS [S1] solutions in the first domain are able to take into account real time or current metrics for the UE domain.

The management function in the UE, e.g. the UE-INCF is able to chain (or to stitch) together the partial edge application instance options, e.g. partial EAPS [S1] solutions in the first domain with respective ones of the partial edge application instance options, e.g. partial EAPS [S2] solutions in the second domain. Such a chaining particularly takes into account the state of the radio link between both domains (UE and MNO). This provides a set of end-to-end edge application instance options, e.g. EAPS [S1+S2] solutions across the first and second domains.

As referenced 5, the end-to-end edge application instance options are forwarded by the management function in the UE, e.g. the UE-INCF to the application manager.

As referenced 6, the application manager selects a complete end-to-end edge application instance option, e.g. EAPS S1_Id+S2_Id solution. The application manager manages the deployment of the selected option (solution) in both the UE domain and the virtual domain.

The application manager may manage the deployment of the selected option via the management function in the UE, e.g. the UE-INCF and the management function in the second domain, e.g. the V-INCF.

When the selected end to end solution is successfully deployed and configured, allocated resources associated with each unused partial edge application instance option are released. This may be one or more partial edge application instance options in the second domain and/or one or more partial edge application instance options in the first domain.

Reference is made to Figures 4a and 4b which show an example procedure of some embodiments. The procedure may be used with the system shown in Figure 3.

In an initialization state, the UE may be considered to be connected to the network through a default PDU session. That PDU session may be application unaware. The example procedure considers an example with radio handover and a reconfiguration of the PDU session. However, it should be noted that other examples may only require PDU session modification and/or may not require radio handover.

A first subsequence A_1 is as follows.

As referenced 1, a request to discover possible edge application instance options, e.g. EAPS options, is sent from an application manager of the UE to the management function in the second domain - e.g. the V-INCF. This request may comprise a representation of the targeted application and/or an application ID (identity).

As referenced 2, metrics are collected by the management function in the second domain, e.g. the V-INCF. The metrics may be collected from one or more of a V-UE (virtual UE), an SMF (session management function), or application function (AF), for example an ECSP. Such a collection may be proactive and carried out before the EAPS request in the part of the procedure referenced 1.

As referenced 3, the management function in the second domain, e.g. the V-INCF identifies partial edge applications instance options, e.g. partial EAPS [S2] options supported by the second domain. The options may be identified by the management function in the second domain, e.g. the V-INCF according to available network and compute resources in the virtual domain. Each partial edge applications instance option, e.g. partial EAPS [S2] option is associated with an identifier. Each partial edge application instance option, e.g. partial EAPS [S2] option involves an identified access node, for example gNB. Different partial edge applications instance options may be associated with the same access node, for example gNB.

The partial edge applications instance options, e.g. partial EAPS [S2] options may be refined by using a virtual UE component managed by the virtual domain. This will be discussed in more detail later.

A second subsequence A_2 is as follows.

As referenced 4, information about the partial edge applications instance options, e.g. partial EAPS [S2] options within the virtual domain are sent by the management function in the second domain, e.g. the V-INCF to the management function in the first domain, e.g. the UE-INCF.

As referenced 5, the management function in the first domain, e.g. the UE-INCF determines the partial edge applications instance options, e.g. partial EAPS [S1] options for the first domain. The management function in the first domain, e.g. the UE-INCF chains (or stitches) the partial edge applications instance options, e.g. partial EAPS [S1] options of the first domain with the partial edge applications instance options, e.g. partial EAPS [S2] option of the second domain. This provides a set of end-to-end options, e.g. [S1+S2] options which are provided by the management function in the first domain, e.g. the UE-INCF to the application manager.

As referenced 6, within the set of end-to-end options, e.g. [S1+S2] options, the application manager selects a unique and complete end-to-end option, e.g. an EAPS solution. It should be noted that each part of each end-to-end option will have its own identity e.g. S1_Id and S2_Id.

As referenced 7, the application manager sends a request to the management function in the second domain, e.g. the V-INCF to deploy the selected partial edge applications instance option, e.g. the selected partial EAPS option - S2_Id of the second domain. It should be appreciated that if the request sent by the application manager is received by the management function in the second domain, e.g. the V-INCF before the initiation of the deployment and configuration of the selected partial edge application instance option, e.g. partial EAPS option - S2_Id of the second domain, the deployment and configuration of the selected partial edge applications instance option is prioritized other partial edge application instance options.

In some embodiments, the options which are not selected may not yet be released until the full deployment of the full end to end solution is confirmed.

The second domain shares with the first UE domain the vUE-IP address related to the S2_Id solution (related to the selected S1_Id1+ S2_Id2 solution) for the UE. Some examples of how this may be achieved will now be discussed.

The management function in the second domain, e.g. the V-INCF drives the SMF to provision the identified vUE-IP address. Accordingly, when the UE requests an IP address from the SMF, the predetermined IP address (associated with the selected EAPS solution) is provided to the UE. The management function in the second domain, e.g. the V-INCF may forward the determined vUE-IP address to the management function in the UE, e.g. the UE-INCF directly or indirectly (via the application manager) so that the management function in the UE, e.g. the UE-INCF is able to configure the UE.

When the S2_id solution is successfully deployed and configured, the management function in the second domain, e.g. the V-INCF sends to the management function in the first domain, e.g. the UE-INCF the relevant IP addresses related to the instantiated application components/compute nodes of the second domain that need to be chained with the application components deployed in the UE domain.

As referenced 8, the application manager sends a request to the management function in the UE, e.g. the UE-INCF to deploy and configure the selected partial edge applications instance option, e.g. partial EAPS option - S1_Id of the first domain. The request to deploy and configure the selected partial edge applications instance option, e.g. partial EAPS option - S1_Id of the first domain may comprise the deployment of determined application components with the allocation of determined compute resources and/or the network configuration of the UE domain.

An application may be composed of a graph of application components including the AC. In some examples, depending on the UE battery status and UE compute resources, the application manager may require part or the entire graph (except the AC) to be offloaded to the second domain. In this situation, only part of the graph may be offloaded, and the application components which stay on the UE (together with the AC) are instantiated on UE compute resources.

A UE or first domain composed at least of a UE may be a smart car, a plane, and/or a large domain with many available networked compute resources. Accordingly, S1_Id should be deployed according to its description. One or more determined application modules are to be deployed on allocated resources. This may be of note for use cases where the application is composed of three or more application modules.

As referenced 9, the management function in the first domain, e.g. the UE-INCF initiates the deployment and configuration of the selected partial edge applications instance option, e.g. partial EAPS option - S1_Id of the first domain.

As referenced 10b, the management function in the first domain, e.g. the UE-INCF may provide an indication to the application manager when the deployment and configuration of the selected partial edge applications instance option of the second domain, e.g. partial EAPS option - S2_Id has been completed. This indication may be from the V-INCF as schematically referenced 10a. The V-INCF may provide the information to the application manager directly or indirectly through UE-INCF.

As referenced 11, handover (e.g. to change gNB), if required is instigated by the management function in the first domain, e.g. the UE-INCF. The management function in the first domain, e.g. the UE-INCF will have knowledge of the target gNB for the selected partial edge application instance option of the second domain, e.g. partial EAPS option - S2_Id. The vUE-Ip address related to the S2_Id solution is enforced. This vUE_Ip address may be obtained via the management function in the second domain, e.g. the V-INCF or via the configuring of the specified PDU session, for example the SMF configured by the management function in the second domain, e.g. the V-INCF. (This vUE-Ip address may be obtained as part of the third sequence B which is described in more detail later).

As referenced 12, the configuring and deploying of the selected partial edge application instance option, e.g. partial EAPS option - S1_Id of the first domain is determined to have been completed by the management function in the first domain, e.g. the UE-INCF.

As referenced 13, the management function in the first domain, e.g. UE-INCF sends a message to the application manager indicating that the configuring and deploying of the selected partial edge application instance option, e.g. partial EAPS option - S1_Id of the first domain is completed.

As referenced 14, the application manager determines that the configuring and deploying of the selected partial edge application instance option, e.g. partial EAPS option - S1_Id of the first domain is completed and that the configuring and deploying of the selected partial edge application instance option, e.g. partial EAPS option - S2_Id of the second domain is completed. Hence the deployment and configuration of the selected solution S1_Id1+S2_Id2 is completed.

As referenced 15, a message is sent from the application manager to the management function in the first domain, e.g. UE-INCF indicating that the resources associated with the unused partial edge application instance options of the first domain can be released.

As referenced 16, a message is sent from the application manager to the management function in the second domain, e.g. the V-INCF indicating that the resources associated with the unused partial edge application instance options of the second domain can be released.

Unused network and compute resource (for supporting options that are not selected) can be released. Unused IP address(es) pre-allocated to the UE may be released.

In some embodiments, parts of the procedure second sequence A-2 may require completion of one or more parts of the third sequence B. One or more parts of the second sequence A-2 may be performed in parallel with one or more parts of the third sequence B.

As referenced 17, for each identified partial edge application instance option of the second domain, e.g. partial EAPS option [S2] identified by an identifier S2_Id, the management function, e.g. the V-INCF allocates a vIP_UE address. The allocated vIP_UE address is provided to the SMF to configure each option. Alternatively, the SMF may provision the vIP_UE addresses upon V-INCF request..

Optionally, the management function in the second domain, e.g. the V-INCF may identify possible PDU sessions involved in the possible partial edge application instance options and may allocate one vIP_UE address per possible PDU session. This may be done as only the radio link is missing per possible PDU session.

The vUE-IP addresses may be allocated promptly and shared as soon as a partial edge application instance option of the second domain, e.g. partial EAPS option [S2] partial solutions are identified.

As reference 18, the SMF provides an acknowledgement of the vIP_UE address for each identified partial edge application instance option of the second domain, e.g. partial EAPS option [S2].

As referenced 19a to 19e, the management function in the second domain, e.g. the V-INCF drives the deployment and configuration of application component functions over compute nodes. The management function in the second domain, e.g. the V-INCF collects related deployment information, for example IP addresses. Each of 19a to 19e represents one partial edge application instance option of the second domain.

Application component functions may be instantiated according to the software constraints of the AC/UE (e.g. operating system, version, virtualization technology, and/or the like).. In such a task, the application modules of the second domain that are to be interconnected with the application modules of the first UE domain may be configured in terms of reachability and/or access rights. This may be using the identities such as the UE-Id, and/or vUE-IP.

One or more of the offloaded application modules may acquire a respective IP address. The one or more IP addresses may be communicated to the AC. The one or more IP addresses may be stored at the virtual UE in the preparation phase before being communicated to the UE-INCF and to the AC/Application manager.

The SMF may use the one or more of the IP addresses in order to pre-configure forwarding rules at the UPFs.

The management function in the second domain, e.g. the V-INCF may drive the SMF to configure the MNO domain network resources (e.g. UPF).

As mentioned previously, a vUE-Ip address is provisioned for the UE for each partial edge application instance option of the second domain. The management function in the second domain, e.g. the V-INCF is aware of the partial edge application instance options and the IP address(s) of application modules when they are deployed and configured.

Accordingly, for each partial edge application instance option of the second domain, the management function in the second domain, e.g. the V-INCF steers the traffic in the second domain (particularly in the MNO domain) to support application flows. This may depend on the knowledge of the vUE-Ip addresses as well as of the IP address or one or more offload application modules.

The management function in the second domain, e.g. the V-INCF may drive the SMF/AMF (access and mobility management function) to configure GTP (GPRS (general packet radio service) Tunnelling Protocol) tunnels.

The management function in the second domain, e.g. the V-INCF may drive the SMF to deploy and configure the related I-UPF (UL CL (uplink classifier)/ BF (branching point) UPF) and PSA-UPF in both flow directions.

The management function in the second domain, e.g. the V-INCF may drive pre-registering of the UE-Id in the gNB to anticipate a potential handover.

The management function in the second domain, e.g. the V-INCF may drive the deployment and configuration of each partial edge application instance option of the second domain, one-by-one. In another embodiment, the management function in the second domain, e.g. the V-INCF may build a list of all gNBs participating in the partial edge application instance option of the second domain. The management function in the second domain, e.g. the V-INCF may then trigger a CHO (conditional handover) type process associated with each of the gNBs. The CHO may be as specified in 3GPP Technical Specification 38.300.

With regards to this third sequence, when a partial edge application instance option of the second domain is deployed and configured, a notification message is sent as referenced 20a to 20e respectively.

This notification message may be sent to the management function in the first domain, e.g. the UE INCF. The notification message may be to share the required deployment and configuration information for a respective partial edge application instance option of the second domain.

The notification message may comprise one or more of:
One or more IP addresses related to one or more application components and/or compute nodes;
the vUE_IP address related to the respective partial edge application instance option of the second domain; and/or
the target access node, for example gNB (for an application aware handover).

This information allows the management function in the first domain, e.g. the UE-INCF to complete the deployment and configuration of the partial edge application instance option of the first domain S1_Id solution as discussed previously in relation to the part of the procedure referenced 9.

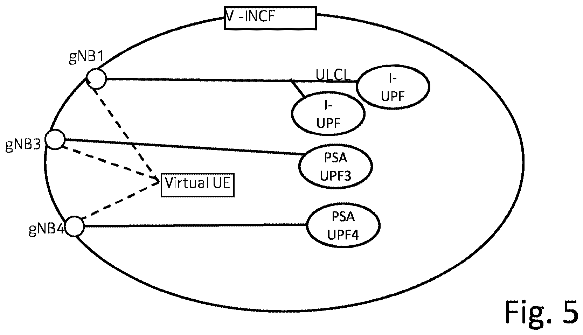

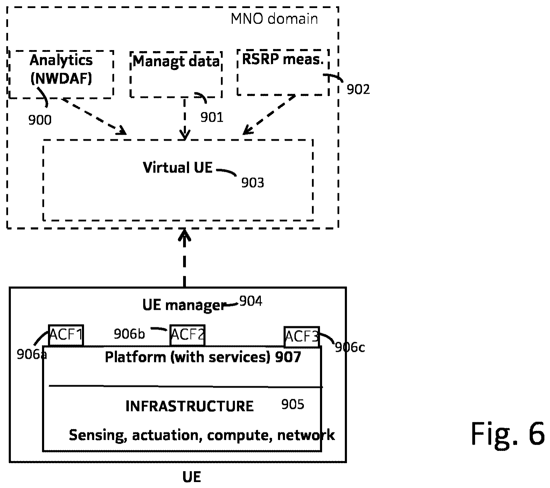

Reference is now made to Figures 5 and 6 which show example embodiments which make use of a virtual UE.

The virtual UE is a digital representation of the UE as known (perceived, inferred and/or learnt) by the second domain (i.e. by the management function in the second domain, e.g. the V-INCF) to cope with interdomain privacy and security issues.

Referring first to Figure 5, this schematically shows the second domain such as previously discussed along with a virtual UE. The virtual UE may be hosted close to the UE (e.g. in a cloud RAN/ORAN (open RAN)) as schematically illustrated in Figure 5. The virtual UE may be interfaced with one or more of the access nodes, for example gNBs. For example, the virtual UE may be interfaced with at least a current source access node, e.g. source gNB.

Reference is made to Figure 6 which schematically shows a virtual UE 903 in the second domain. The virtual UE may receive analytics data. This may be received from a NWDAF (network data analytics function) 900. The virtual UE may receive management data 901. The virtual UE may receive RSRP (reference signal received power) 902 and/or other measurement information (for example that the real UE sends to the gNBs).

The virtual UE may comprise a deterministic description of the UE capabilities. For example, the deterministic capabilities may comprise one or more of: operating system; virtualization technology; compute and network capabilities; and UE location.

The virtual UE may comprise a probabilistic description of the UE capabilities. For example, the probabilistic capabilities may be provided by a probabilistic description of the UE. The virtual UE may host and manage a prediction model of the UE to predict one or more of: a state of the UE at a particular time; available network and compute resources; a future location; and/or the like.

The virtual UE component can be used by the management function in the second domain, e.g. the V-INCF to predict potential end to end solutions across the two domains to meet the application requirements. The partial edge application instance options of the second domain which do not feature in the potential end to end solutions across the two domains may be filtered out.

The virtual UE may be a metrics collection point and/or representation of the UE. The virtual UE may be a collection point of UE related information. The virtual UE may be a collection point for collecting UE metrics related to capabilities and/or states.

The virtual UE may discover the compute capabilities associated with the UE.

For example, the type allocation code (TAC) used by mobile operators to identify the device type may be used. The TAC is a unique code that is assigned to each device by the manufacturer. Currently that is 8-digits. The TAC is part of the International Mobile station Equipment Identity (IMEI), which is a unique identifier for a mobile device that is embedded into the device at the time of manufacture The IMEI is used by mobile operators to identify the device on their network, for example for device management and network optimization.

The masked IMEISV (International Mobile station Equipment Identity and Software Version number) may alternatively or additionally be used. The masked IMEISV contains the IMEISV value with a mask, to identify a terminal model without identifying an individual Mobile Equipment.

In some embodiments, analytics such as provided by the NWDAF can be used to predict the state of compute resources associated with the UE. For example, the analytics may be used to guarantee, probabilistically, a minimum compute resources associated with the UE, a device, and/or an AC. For example, there may be a probabilistic guarantee such as 99% sure that a given CPU load can be allocated to the AC.

In some embodiments, the virtual UE may be used to discover the AMF responsible for the UE by contacting the NRF (network repository function). The Virtual UE or the management function in the second domain, e.g. the V-INCF may subscribe to an AMF location service and gets the UE location from the AMF (e.g. Tracking Area ID).

RSRP and/or similar measurements reported by the real UEs may be collected by the virtual UE.

The virtual UE may have information relating to one or more of the following UE capabilities; processor capability; memory capability; and wireless capability.

The virtual UE may measure and/or predict UE related state.

The virtual UE may collect radio measurements reported to the source access node, e.g. gNB.

The virtual UE may collect predicted UE compute states. These predicted states may be provided by the NWDAF or based on data from the NWDAF.

In some embodiments, the NWDAF and virtual UE may be co-located.

The virtual UE may track deployed application component functions (ACFs), e.g. application modules 906a, 906b, and 006c on the UE. The virtual UE may track predicted states or determined states of the application component functions. The UE ACFs are supported by a platform 907 which overlies an infrastructure 905. The infrastructure may provide sensing, actuation, compute, and/or network capabilities and/or artificial intelligence capabilities. The UE ACFs are connected to the second domain ACFs via one or many PDU Sessions to build up the selected EAPS solution. Application routing and forwarding (to/from the correct PDU Session) on the UE may be guided by the user rule selection policy (URSP) provided by the SMF.

The virtual UE may collect and store IP addresses pre-allocated by the SMF for each option determined by the management function in the second domain, e.g. the V-INCF. These may be for end-to-end options or partial options.

In some embodiments, the virtual UE may also perform some tasks on behalf of the management function in the second domain, e.g. the V-INCF.

The virtual UE may support some UE related behaviors.

For example, the virtual UE may trigger the handover procedure, such as the CHO (e.g. by sending a dedicated measurement report to the source gNB).

For example, the virtual UE may request multiple source IP addresses from the SMF. The virtual UE may store the source IP address for preparing the possible PDU sessions for the possible application instances.

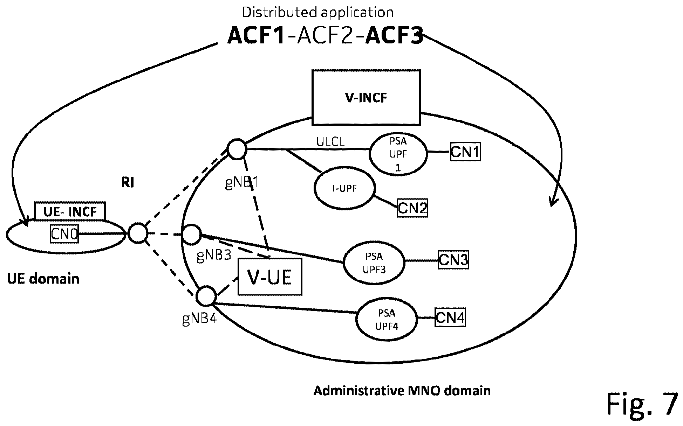

Reference is made to Figure 7 which shows a dynamic compute offload example. In a two-domain context such as outlined above there is a UE domain and a second domain, for example an administrative MNO domain having both network and compute resources. The compute resources are referred to CNs (Compute Nodes).

The dynamic compute offload example has a distributed application as a chain of three application components: ACF1-ACF2-ACF3

In this example, the first application component ACF1 is strictly assigned to the UE domain (e.g., AC). This may be a user plane application module.

In this example, the third application component ACF3 is strictly assigned to the second domain, e.g. MNO domain.

In this example, the deployment of the second application component ACF2 is not restricted.

The first domain may comprise a management function such as a UE-INCF, such as previously discussed.

The second domain, for example the MNO domain is aware of the metrics associated with the radio interface (RI) between the UE and radio access nodes, e.g. gNBs. A management function e.g. V-INCF may be provided such as previously described.

As previously described, partial edge application instance options of the second domain, e.g. partial compute offload option S2 are determined and deployed.

An example of a set of partial edge application instance options of the second domain, e.g. partial compute offload option S2 are set out below. These options are classified per gNB_Id in the following example:
S2_1: (RI- gNB1)- [ACF2] / CN2-[ACF3] /CN1
S2_2: (RI- gNB1)- [ACF3] / CN1-[ACF2] /CN2
S2_3: (RI- gNB1)- [ACF2-ACF3] / CN1
S2_4: (RI- gNB1)- [ACF2-ACF3] / CN2
S2_5: (RI-gNB3)- [ACF2-ACF3] /CN3
S2_6: (RI-gNB4)- [ACF3] /CN4

Optionally, a virtual UE (V-UE) may be deployed such as previously described. According to the knowledge of the virtual UE, the set of partial edge application instance options of the second domain, e.g. partial compute offload options S2 are refined in order to limit the number of options. By way of example only, the set of remaining options may be as follows:
S2_1: (RI- gNB1)- [ACF2] / CN2-[ACF3] /CN1
S2_5: (RI-gNB3)- [ACF2+ACF3] /CN3
S2_6: (RI-gNB4)- [ACF3] /CN4

The remaining options S2_1, S2_5, S2_6 solutions are deployed and configured such as previously described.

In parallel:
The S2_1, S2_5, S2_6 options are forwarded to the UE-INCF to be complemented with the set of partial edge application instance options of the first domain, e.g. partial compute offload options S1. By way of example only, set of partial edge application instance options of the first domain, e.g. partial compute offload options S1 may be as follows:
S1_1: RI-[ACF1]/CN0
S1_2: RI- [ACF1-ACF2] /CN0

This allows the determination of complete (that is end-to-end) complete and relevant combined options meeting application requirements. By way of example only, the set of combined end-to-end options may be as follows:
S1_1+S2_1: ACF1/CN0-(RI- gNB1)- [ACF2] / CN2-[ACF3] /CN1
S1_1+ S2_5: ACF1/CN0-(RI- gNB3)-[ACF2+ACF3] /CN3
S1_2+: S2_6: [ACF1-ACF2] /CN0-(RI-gNB4)- [ACF3] /CN4

Then, the application manager selects one option (e.g. a so-called best option), for example S1_1+S2_1, "ACF1/CN0-(RI- gNB1)- [ACF2] / CN2)-[ACF3] /CN1". As discussed previously, the selection may be based on internal policies of the application manager. The application manager deploys and configures the selected option by:
1) sending a deployment and configuration request message to the management function in the second domain, e.g. the V-INCF. This is to deploy and configure the S2_1 solution in the MNO domain. It should be noted that in embodiments, this task is already underway or already completed as the partial options in the second domain have already been configured and deployed.
   When this task is completed, the management function in the second domain, e.g. the V-INCF sends back a notification to the application manager and/or the management function in the first domain, e.g. the UE-INCF. The notification may indicate completion of the task. The notification may comprise information such as IP address of ACF2/CN2 and gNB1 target.
2) sending a deployment and configuration request message to the management function in the first domain, e.g. the UE-INCF to deploy and configure the S1_1 solution

This may involve the instantiation or activation of ACF1/ CN0.

This may involve managing a handover process (as a general case) and/or PDU session reconfiguration or modification. The UE may obtain from the SMF or the involved PSA-UPF a pre-determined Ip address related to the S1_1+S2_1 selected solution. This address being previously notified by the management function in the second domain, e.g. the V-INCF to the SMF).

When the task of the management function in the second domain, e.g. the V-INCF related to the selected S2_1 solution deployment / configuration is completed, the related deployment information (e.g. IP address of ACF2/CN2) is forwarded to the management function in the first domain, e.g. the UE-INCF to complement the deployment and configuration of the S1_1 solution.

When the UE related deployment is completed, a notification indicating that the deployment has been completed is sent by the management function in the first domain, e.g. the UE-INCF to the application manager. This notification confirms the successful deployment and configuration of the selected "S1_Id+S2_Id" EAPS solution.

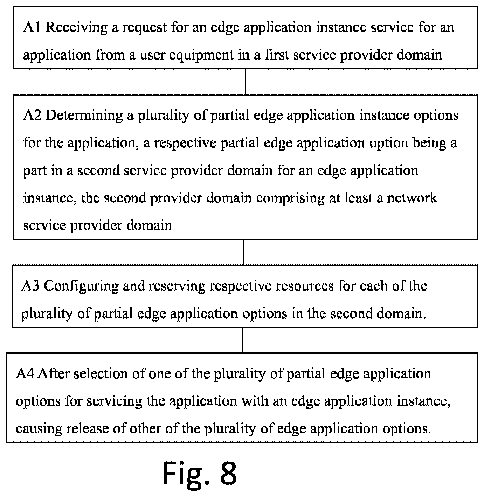

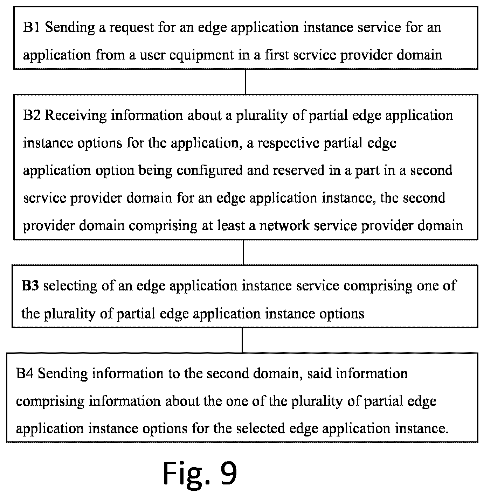

Reference is made to FIGs. 8 and 9 which shows some methods of some example embodiments.

The respective methods may be performed by an apparatus.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

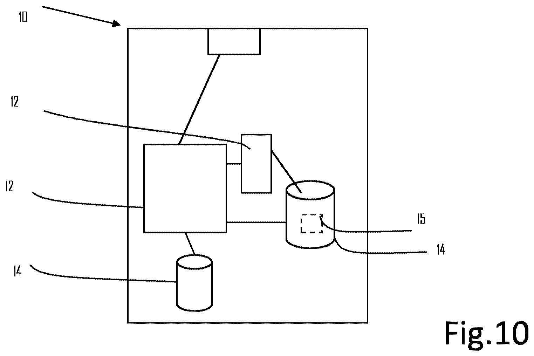

Alternatively or additionally, the apparatus may be such as discussed in relation to FIG. 10.

The respective methods may be provided by computer program code or computer executable instructions.

Reference is made to Figure 8. The apparatus may be or provided in an network side apparatus. The apparatus may provide or be a management function. The apparatus may provide or be an INCF.

The method comprises as referenced A1, receiving a request for an edge application instance service for an application from a user equipment in a first service provider domain.

The method comprises as referenced A2, determining a plurality of partial edge application instance options for the application, a respective partial edge application option being a part in a second service provider domain for an edge application instance, the second provider domain comprising at least a network service provider domain.

The method comprises as referenced A3, configuring and reserving respective resources for each of the plurality of partial edge application options in the second domain.

The method comprises as referenced A4, after selection of one of the plurality of partial edge application options for servicing the application with an edge application instance, causing release of other of the plurality of edge application options.

Reference is made to Figure 9. The apparatus may be or provided in an apparatus. The apparatus may provide or be a management function. The apparatus may provide or be an INCF. The apparatus may be provided in a UE.

The method comprises as referenced B1, sending a request for an edge application instance service for an application from a user equipment in a first service provider domain;
The method comprises as referenced B2, receiving information about a plurality of partial edge application instance options for the application, a respective partial edge application option being configured and reserved in a part in a second service provider domain for an edge application instance, the second provider domain comprising at least a network service provider domain;
The method comprises as referenced B3, selecting of an edge application instance service comprising one of the plurality of partial edge application instance options.

The method comprises as referenced B4, sending information to the second domain, said information comprising information about the one of the plurality of partial edge application instance options for the selected edge application instance.

Fig. 10 shows, by way of example, a block diagram of an apparatus 10. The apparatus 10 comprises, for example, at least one processor 12 and at least one memory 14 storing instructions 15 that, when executed by the at least one processor, cause the apparatus 10 at least to perform the method or methods as disclosed herein, and any of the embodiments thereof. In an example, the at least one memory and the instructions (e.g. a computer program code, software), are configured, with the at least one processor, to cause the apparatus 10 to perform the method or methods as disclosed herein, and any of the embodiments thereof.

A processor 12 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable, a baseband integrated circuit or processor integrated circuit for a mobile device or a similar integrated circuit in server, a cellular network node, or other computing or network node.

The memory 14 may be implemented using any suitable data storage technology. The memory may comprise a database for storing data. The memory 14 may be at least in part external to apparatus 10 but accessible to apparatus 10.

The instructions 15 may be comprised in a computer readable medium or a non-transitory computer readable medium. A term non-transitory, as used herein, is a limitation of the medium itself (i.e., tangible, not a signal) as opposed to a limitation on data storage persistency (e.g. random access memory, RAM, vs. read only memory, ROM).

For example, the apparatus 10 is or may provide a management function or a network function. The apparatus may be an INCF. The apparatus may be in a user equipment. The apparatus 10 may be caused or configured to perform at least the method of Fig. 9 and/or any one or more of the embodiments described.

As another example, the apparatus 10 is or may provide a management function or a network function. The apparatus may be an INCF. The apparatus may be in a domain such as a mobile network domain. The apparatus 10 may be caused or configured to perform at least the method of Fig. 8 and/or any one or more of the embodiments described.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods as disclosed herein, and any of the embodiments thereof.

As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though the invention has been described above with reference to an example according to the accompanying drawings, it is clear that the invention is not restricted thereto but can be modified in several ways within the scope of the appended claims. Therefore, all words and expressions should be interpreted broadly, and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method performed by a management function in a second service provider domain, the method comprising:
receiving a request for an edge application instance service for an application from a user equipment in a first service provider domain;
determining a plurality of partial edge application instance options for the application, a respective partial edge application option being a part in the second service provider domain for an edge application instance, the second provider domain comprising at least a network service provider domain;
configuring and reserving respective resources for each of the plurality of partial edge application options in the second domain; and
after selection of one of the plurality of partial edge application options for servicing the application with an edge application instance, causing release of other of the plurality of edge application options.

2. The method as claimed in claim 1, wherein the configuring and reserving respective resources of one or more of the plurality of partial edge application options is prior to the selection of one of the plurality of partial edge application options for servicing the application with the edge application instance.

3. The method as claimed in claim 1 or 2, wherein the determining of the plurality of partial edge application instance options for the application comprises determining the plurality of partial edge application instance options in dependence on available network and computing resources in the second domain.

4. The method as claimed in any preceding claim, wherein the determining of the plurality of partial edge application instance options for the application comprises determining for each of plurality of partial edge application instance options one or more of: a respective base station; or radio resources for communications with the user equipment.

5. The method as claimed in any preceding claim, wherein the determining of the plurality of partial edge application instance options for the application comprises receiving, from apparatus in the second domain, information relating to the user equipment.

6. The method as claimed in claim 5, wherein the information relating to the user equipment is deterministic and comprises one or more of: operating system; virtualization technology; compute capabilities; network capabilities; or location.

7. The method as claimed in claim 5 or 6, wherein the information relating to the user equipment is predictive and comprises one or more of: predicted available network resources; predicted available compute resources; predicted location; or one or more predicted states.

8. The method as claimed in any of claims 5 to 7, comprising using the information relating to the user equipment to select a subset of one or more of the determined plurality of partial edge application instance options, the selected one of the plurality of partial edge application options being selected from the subset.

9. The method as claimed in any preceding claim, comprising receiving information from the user equipment in the first service provider domain, said information comprising information about the one of the plurality of partial edge application instance options for servicing the application with the edge application instance.

10. A method performed by a user equipment in a first service provider domain, the method comprising:
sending a request for an edge application instance service for an application;
receiving information about a plurality of partial edge application instance options for the application, a respective partial edge application option being configured and reserved in a part in a second service provider domain for an edge application instance, the second provider domain comprising at least a network service provider domain;
selecting of an edge application instance service comprising one of the plurality of partial edge application instance options; and
sending information to the second domain, said information comprising information about the one of the plurality of partial edge application instance options for the selected edge application instance.

11. The method as claimed in claim 10, wherein the information about the plurality of partial edge application instance options for the application comprises configuration related information for use by the user equipment.

12. The method as claimed in claim 10 or 11, wherein the information about the plurality of partial edge application instance options for the application comprises for each of plurality of partial edge application instance options one or more of: a respective base station; radio resources for communications with the user equipment; a respective identifier; an internet protocol address associated with the user equipment; or an internet protocol address associated with a respective application module dedicated to the user equipment.

13. The method as claimed in any of claims 10 to 12, comprising determining a plurality of first domain partial edge application instance options for the application, a respective first domain partial edge application options being a part in the first domain for the edge application instance.

14. An management function apparatus in a second service provider domain comprising:
means for receiving a request for an edge application instance service for an application from a user equipment in a first service provider domain;
means for determining a plurality of partial edge application instance options for the application, a respective partial edge application option being a part in a second service provider domain for an edge application instance, the second provider domain comprising at least a network service provider domain;
means for configuring and reserving respective resources for each of the plurality of partial edge application options in the second domain; and
means for, after selection of one of the plurality of partial edge application options for servicing the application with an edge application instance, causing release of other of the plurality of edge application options.

15. A user equipment comprising:
means for sending a request for an edge application instance service for an application from a user equipment in a first service provider domain;
means for receiving information about a plurality of partial edge application instance options for the application, a respective partial edge application option being configured and reserved in a part in a second service provider domain for an edge application instance, the second provider domain comprising at least a network service provider domain;
means for selecting of an edge application instance service comprising one of the plurality of partial edge application instance options; and
means for sending information to the second domain, said information comprising information about the one of the plurality of partial edge application instance options for the selected edge application instance.
